# EUROPEAN PATENT APPLICATION

(11) **EP 4 729 758 A1**
(43) Date of publication of application: **22.04.2026**
(21) Application number: 25208990.9
(22) Date of filing: 15.10.2025
(51) Int. Cl.: F02C 7/14, F02C 9/28, F02K 3/06, F02K 3/115

(54) **VARIABLE AREA INLET FOR TURBINE ENGINE HEAT EXCHANGE SYSTEM**

(30) Priority: 15.10.2024 US 202418915890
(71) Applicant: RTX Corporation, Farmington, CT 06032 (US)
(72) Inventor: CLARK, Thomas E., Wells, 04090 (US); MORTON, Jeffrey T., Manchester, 06040 (US); YAZICI, Murat, Glastonbury, 06033 (US); BREAULT, Andrew E., Bolton, 06043 (US)
(74) Representative: Dehns

(57) **Abstract**

An assembly is provided for an aircraft powerplant (20). This assembly includes a vane structure (88) and a heat exchanger (90). The vane structure (88) extends longitudinally to a leading edge (108) of the vane structure (88). The vane structure (88) includes a translating body (114), a stationary body (112) and an inlet passage (150). The translating body (114) is configured to translate longitudinally between a first position and a second position. The translating body (114) is configured to form the leading edge (108) of the vane structure (88) and close an inlet (156) into the inlet passage (150) when in the first position. The translating body (114) is configured to open the inlet (156) into the inlet passage (150) when in the second position. The heat exchanger (90) is disposed within the stationary body (112). The inlet passage (150) projects into the stationary body (112) from the inlet (156) into the inlet passage (150) to the heat exchanger (90).

## Description

### Technical Field

This disclosure relates generally to an aircraft powerplant and, more particularly, to a heat exchange system for the aircraft powerplant.

### Background Information

An aircraft powerplant such as a turbofan propulsion system typically includes multiple heat exchange systems. Various types and configurations of heat exchange systems are known in the art. While these known heat exchange systems have various benefits, there is still room in the art for improvement.

### SUMMARY OF THE DISCLOSURE

According to an aspect of the present invention, an assembly is provided for an aircraft powerplant. This assembly includes a vane structure and a heat exchanger. The vane structure extends longitudinally to a leading edge of the vane structure. The vane structure includes a translating body, a stationary body and an inlet passage. The translating body is configured to translate longitudinally between a first position and a second position. The translating body is configured to form the leading edge of the vane structure and close an inlet into the inlet passage when in the first position. The translating body is configured to open the inlet into the inlet passage when in the second position. The heat exchanger is disposed within the stationary body. The inlet passage projects into the stationary body from the inlet into the inlet passage to the heat exchanger.

According to another aspect of the present invention, another assembly is provided for an aircraft powerplant. This assembly includes an engine core, a bypass flowpath and a bifurcation structure. The engine core includes a compressor section, a combustor section and a turbine section. The bypass flowpath is disposed outside of the engine core. The bifurcation structure extends radially across the bypass flowpath. The bifurcation structure extends longitudinally to a leading edge of the bifurcation structure. The bifurcation structure includes a structure passage extending through the bifurcation structure from a variable area inlet into the structure passage to a fixed area outlet from the structure passage. The variable area inlet into the structure passage fluidly couples the structure passage to the bypass flowpath at the leading edge of the bifurcation structure. The fixed area outlet from the structure passage fluidly couples the structure passage to the bypass flowpath along an exterior side of the bifurcation structure. The heat exchanger is located within the bifurcation structure and is fluidly coupled inline along the structure passage.

According to still another aspect of the present invention, another assembly is provided for an aircraft powerplant. This assembly includes an engine core, a bypass flowpath, a bifurcation structure, an actuator and a controller. The engine core includes a compressor section, a combustor section and a turbine section. The bypass flowpath is disposed outside of the engine core. The bifurcation structure extends radially across the bypass flowpath. The bifurcation structure extends longitudinally to a leading edge of the bifurcation structure. The bifurcation structure includes a structure passage and a movable body. The structure passage extends through the bifurcation structure from an inlet into the structure passage to an outlet from the structure passage. The inlet into the structure passage fluidly couples the structure passage to the bypass flowpath at the leading edge of the bifurcation structure. The outlet from the structure passage fluidly couples the structure passage to the bypass flowpath downstream of the inlet into the bypass flowpath along the bifurcation structure. The movable body is configured to move between a first position and a second position to change an area of the inlet into the structure passage. The actuator is operatively coupled to the movable body. The controller is in signal communication with the actuator. The controller is configured to signal the actuator to move the movable body to or towards the first position when a measured parameter temperature is below a threshold. The controller is configured to signal the actuator to move the movable body to or towards the second position when the measured parameter temperature is above the threshold.

In an embodiment of the above, the measured parameter temperature may be indicative of a temperature of ambient air outside of the aircraft powerplant.

In an embodiment according to any of the previous embodiments, the measured parameter temperature may be indicative of a temperature of fluid within the aircraft powerplant.

In an embodiment according to any of the previous embodiments, the fluid may be lubricant.

In an embodiment according to any of the previous embodiments, the vane structure may be configured as a nacelle bifurcation structure.

In an embodiment according to any of the previous embodiments, the assembly may also include an engine core and a bypass flowpath. The engine core may include a compressor section, a combustor section and a turbine section. The bypass flowpath may be disposed outside of the engine core. The vane structure may be disposed in and extend across the bypass flowpath.

In an embodiment according to any of the previous embodiments, the aircraft powerplant may be configured as or otherwise include a turbofan propulsion system.

In an embodiment according to any of the previous embodiments, the translating body may translate longitudinally into the inlet passage as the translating body translates towards the second position.

In an embodiment according to any of the previous embodiments, the inlet into the inlet passage may at least partially be formed by and may be laterally between a first side of the translating body and a first wall of the stationary body.

In an embodiment according to any of the previous embodiments, the inlet into the inlet passage may include a first inlet orifice and a second inlet orifice with the translating body disposed laterally between the first inlet orifice and the second inlet orifice. The first inlet orifice may be formed by and may be laterally between a first exterior side of the translating body and a first interior side of the stationary body. The second inlet orifice may be formed by and may be laterally between a second exterior side of the translating body and a second interior side of the stationary body.

In an embodiment according to any of the previous embodiments, the translating body may include an upstream section and a downstream section. The upstream section may laterally taper as the upstream section extends longitudinally towards the leading edge of the vane structure. The downstream section may laterally taper as the downstream section extends longitudinally away from the leading edge of the vane structure.

In an embodiment according to any of the previous embodiments, a longitudinal length of the upstream section may be greater than a longitudinal length of the downstream section.

In an embodiment according to any of the previous embodiments, the inlet into the inlet passage may be at the leading edge of the vane structure when the translating body is in the second position.

In an embodiment according to any of the previous embodiments, the vane structure may also include an outlet passage. The outlet passage may extend from the heat exchanger through the stationary body to an outlet from the outlet passage in an exterior of the stationary body.

In an embodiment according to any of the previous embodiments, the outlet from the outlet passage may be a fixed area outlet.

In an embodiment according to any of the previous embodiments, the stationary body may extend laterally between a first exterior side of the stationary body and a second exterior side of the stationary body. The outlet from the outlet passage may be disposed in the first exterior side of the stationary body.

In an embodiment according to any of the previous embodiments, the assembly may also include an actuation system configured to translate the translating body between the first position and the second position. The actuation system may include an actuator and a lead screw drive operatively coupling the actuator to the translating body.

In an embodiment according to any of the previous embodiments, the assembly may also include a linear actuator configured to translate the translating body between the first position and the second position.

In an embodiment according to any of the previous embodiments, the assembly may also include an actuator and a controller. The actuator may be operatively coupled to the translating body. The controller may be in signal communication with the actuator. The controller may be configured to signal the actuator to move the translating body to or towards the first position when a measured parameter temperature is below a threshold. The controller may be configured to signal the actuator to move the translating body to or towards the second position when the measured parameter temperature is above the threshold.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic sectional illustration of an aircraft powerplant.
FIG. 2 is a partial schematic sectional illustration of the aircraft powerplant at a heat exchange system with a movable body in a first position.
FIG. 3 is a partial schematic sectional illustration of the aircraft powerplant at the heat exchange system with the movable body in a second position.
FIG. 4 is a cross-sectional illustration of the aircraft powerplant with multiple bifurcation structures.
FIG. 5 is a cross-sectional illustration of the aircraft powerplant with a single bifurcation structure.
FIG. 6 is a partial, plan view schematic illustration of a vane structure within a bypass flowpath with the movable body in the first position.
FIG. 7 is a partial, plan view schematic illustration of the vane structure within the bypass flowpath with the movable body in the second position.
FIGS. 8 and 9 are schematic illustrations of the movable body with various actuation systems.
FIG. 10 is a cross-sectional illustration of the aircraft powerplant with multiple bifurcation structures, where each bifurcation structure is configured with a heat exchanger.

### DETAILED DESCRIPTION

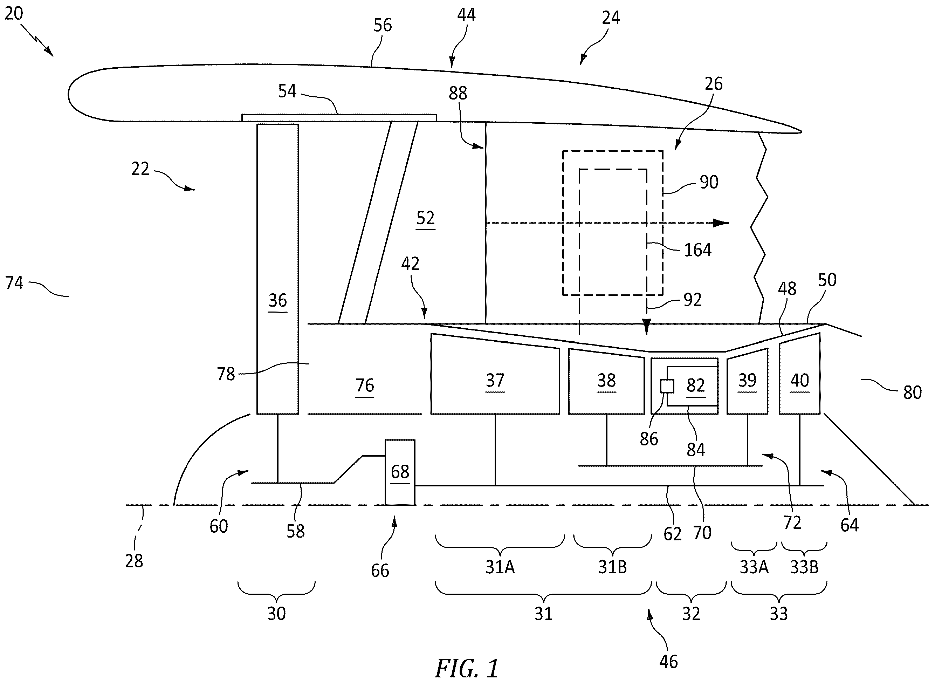

FIG. 1 illustrates a powerplant 20 for an aircraft. The aircraft may be an airplane, a drone (e.g., an unmanned aerial vehicle (UAV)) or any other manned or unmanned aerial vehicle or system. The aircraft powerplant 20 of FIG. 1 is configured as, or otherwise included as part of, a propulsion system for the aircraft. For ease of description, this aircraft propulsion system is described below as a ducted rotor propulsion system such as a turbofan propulsion system. The present disclosure, however, is not limited to such an exemplary aircraft propulsion system. The aircraft propulsion system, for example, may alternatively be configured as any other type of ducted or open rotor propulsion system with, for example, an internal bypass flowpath. The aircraft powerplant 20 of FIG. 1 includes a gas turbine engine 22, an engine housing 24 and a heat exchange system 26.

The turbine engine 22 extends axially along an axis 28 between an axial forward, upstream end of the turbine engine 22 and an axial aft, downstream end of the turbine engine 22. Briefly, the axis 28 may be a centerline axis of the aircraft powerplant 20 and/or one or more of its members. The axis 28 may also or alternatively be a rotational axis for one or more members of the turbine engine 22.

The turbine engine 22 of FIG. 1 is configured as a turbofan engine. The turbine engine 22 of FIG. 1, for example, includes a propulsor section 30 (e.g., a fan section), a compressor section 31, a combustor section 32 and a turbine section 33. The compressor section 31 of FIG. 1 includes a low pressure compressor (LPC) section 31A and a high pressure compressor (HPC) section 31B. The turbine section 33 of FIG. 1 includes a high pressure turbine (HPT) section 33A and a low pressure turbine (LPT) section 33B.

The engine sections 30-33B may be arranged sequentially along the axis 28 within the engine housing 24. The propulsor section 30 includes a bladed propulsor rotor 36; e.g., a fan rotor. The LPC section 31A includes a bladed low pressure compressor (LPC) rotor 37. The HPC section 31B includes a bladed high pressure compressor (HPC) rotor 38. The HPT section 33A includes a bladed high pressure turbine (HPT) rotor 39. The LPT section 33B includes a bladed low pressure turbine (LPT) rotor 40. These engine rotors 36-40 are housed within the engine housing 24. The engine housing 24 of FIG. 1, for example, includes an inner housing structure 42 and an outer housing structure 44. Here, at least (or only) the LPC section 31A, the HPC section 31B, the combustor section 32, the HPT section 33A and the LPT section 33B collectively form a core 46 (e.g., a gas generator) of the turbine engine 22.

The inner housing structure 42 of FIG. 1 includes an inner engine case 48 (e.g., a core case) for the turbine engine 22, and an inner nacelle structure 50 (sometimes referred to as an inner fixed structure (IFS)). The inner engine case 48 is disposed radially outboard of, extends axially along and may circumscribe one or more or all of the engine sections 31A-33B and their respective engine rotors 37-40. The inner engine case 48 may thereby house and provide a support structure for the respective engine sections 31A-33B and their respective engine rotors 37-40. The inner nacelle structure 50 is configured to provide an aerodynamic cover over the engine core 46 and its inner engine case 48. The inner housing structure 42 and its inner nacelle structure 50 of FIG. 1 also forms a radial inner peripheral boundary of a (e.g., annular) bypass flowpath 52 within the aircraft powerplant 20.

The outer housing structure 44 of FIG. 1 includes an outer engine case 54 (e.g., a fan case) for the turbine engine 22, and an outer nacelle structure 56. The outer engine case 54 is disposed radially outboard of, extends axially along and may circumscribe the propulsor section 30 and its propulsor rotor 36. The outer engine case 54 may thereby house and provide a containment structure for the propulsor section 30 and its propulsor rotor 36. The outer nacelle structure 56 is configured to provide an aerodynamic cover over the outer engine case 54. The outer housing structure 44 and its outer nacelle structure 56 of FIG. 1 also forms a radial outer peripheral boundary of the bypass flowpath 52.

The propulsor rotor 36 of FIG. 1 is connected to and rotatable with a propulsor shaft 58; e.g., a fan shaft. At least (or only) the propulsor rotor 36 and the propulsor shaft 58 collectively form a propulsor rotating assembly 60. This propulsor rotating assembly 60 of FIG. 1 and its members 36 and 58 are rotatable about the axis 28.

The LPC rotor 37 is coupled to and rotatable with the LPT rotor 40. The LPC rotor 37 of FIG. 1, for example, is connected to the LPT rotor 40 through a low speed shaft 62. At least (or only) the LPC rotor 37, the LPT rotor 40 and the low speed shaft 62 collectively form a low speed rotating assembly 64; e.g., a low speed spool of the engine core 46. This low speed rotating assembly 64 of FIG. 1 and its members 37, 40 and 62 are rotatable about the axis 28. The low speed rotating assembly 64 of FIG. 1 is also coupled to the propulsor rotating assembly 60. The low speed rotating assembly 64 of FIG. 1, for example, is connected to the propulsor rotating assembly 60 through a drivetrain 66. This drivetrain 66 may be configured as a geared drivetrain, where a geartrain 68 (e.g., a transmission, a speed change device, an epicyclic geartrain, etc.) is disposed between and operatively couples the propulsor rotating assembly 60 to the low speed rotating assembly 64 and its LPT rotor 40. With this arrangement, the propulsor rotor 36 may rotate at a different (e.g., slower) rotational speed than the low speed rotating assembly 64 and its LPT rotor 40. However, the drivetrain 66 may alternatively be configured as a direct drive drivetrain, where the geartrain 68 is omitted. With such an arrangement, the propulsor rotor 36 may rotate at a common (the same) rotational speed as the low speed rotating assembly 64 and its LPT rotor 40.

The HPC rotor 38 is coupled to and rotatable with the HPT rotor 39. The HPC rotor 38 of FIG. 1, for example, is connected to the HPT rotor 39 through a high speed shaft 70. At least (or only) the HPC rotor 38, the HPT rotor 39 and the high speed shaft 70 collectively form a high speed rotating assembly 72; e.g., a high speed spool of the engine core 46. This high speed rotating assembly 72 of FIG. 1 and its members 38, 39 and 70 are rotatable about the axis 28.

During aircraft powerplant operation, ambient air (e.g., air from outside of the aircraft) enters the aircraft powerplant 20 and its turbine engine 22 through an airflow inlet 74. This air is directed across the propulsor rotor 36 and into a (e.g., annular) core flowpath 76 and the bypass flowpath 52. The core flowpath 76 of FIG. 1 extends sequentially through the LPC section 31A, the HPC section 31B, the combustor section 32, the HPT section 33A and the LPT section 33B from an airflow inlet 78 into the core flowpath 76 to a combustion products exhaust 80 from the core flowpath 76. Here, the core exhaust 80 may also be a combustion products exhaust from the turbine engine 22 and, more generally, the aircraft powerplant 20. The air entering the core flowpath 76 may be referred to as "core air". The bypass flowpath 52 of FIG. 1 extends through a (e.g., annular) bypass duct. This bypass flowpath 52 and its bypass duct bypass (e.g., are disposed radially outboard of and extend along) the engine core 46. The air entering the bypass flowpath 52 may be referred to as "bypass air".

The core air is compressed by the LPC rotor 37 and the HPC rotor 38 and is directed into a (e.g., annular) combustion chamber 82 of a (e.g., annular) combustor 84 in the combustor section 32. Fuel is injected into the combustion chamber 82 by one or more fuel injectors 86 and mixed with the compressed core air to provide a fuel-air mixture. This fuel-air mixture is ignited and combustion products thereof flow through and sequentially drive rotation of the HPT rotor 39 and the LPT rotor 40 about the axis 28. The rotation of the HPT rotor 39 and the LPT rotor 40 respectively drive rotation of the HPC rotor 38 and the LPC rotor 37 about the axis 28 and, thus, compression of the air received from the core inlet 78. The rotation of the LPT rotor 40 also drives rotation of the propulsor rotor 36 about the axis 28. The rotation of the propulsor rotor 36 propels the bypass air through and out of the bypass flowpath 52. The propulsion of the bypass air may account for a majority of thrust generated by the aircraft powerplant 20 and its turbine engine 22.

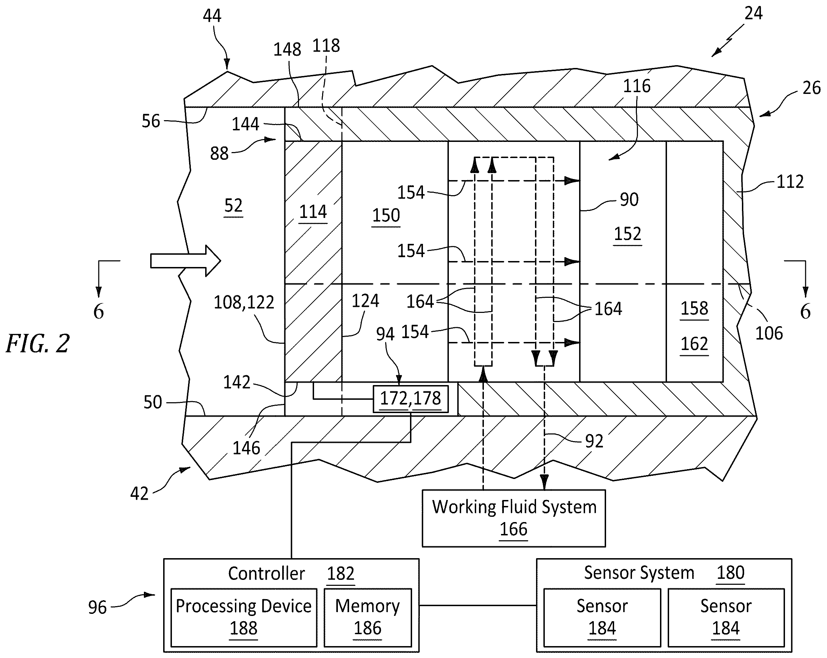

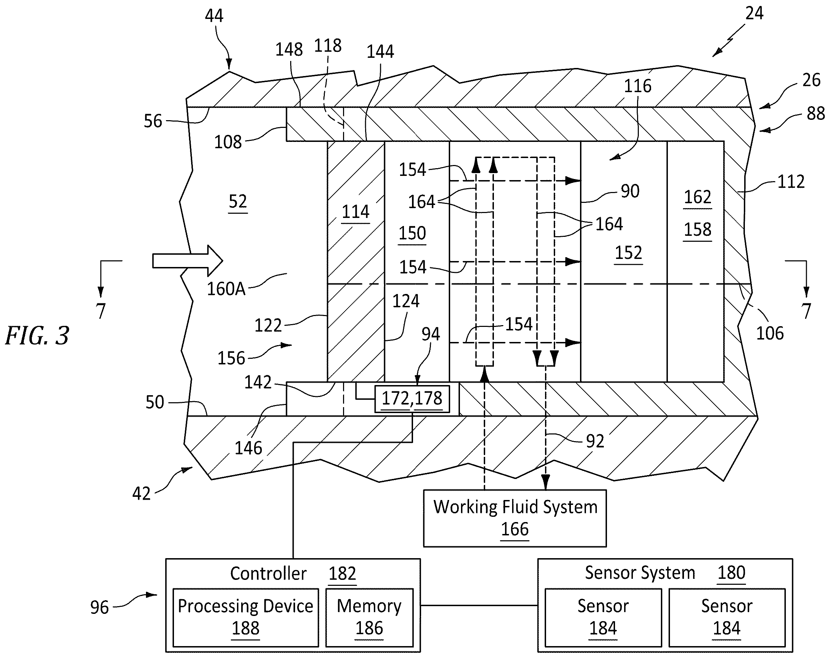

Referring to FIGS. 2 and 3, the heat exchange system 26 is configured to transfer heat energy between (a) a flow of a working fluid of the turbine engine 22 and (b) a flow of the bypass air bled from the bypass flowpath 52. Examples of the working fluid include, but are not limited to, engine lubricant (e.g., oil), a flow of the core air bled from the core flowpath 76 (see FIG. 1), fuel, hydraulic fluid, or the like. The heat exchange system 26 includes a vane structure 88, a heat exchanger 90, a working fluid circuit 92 and an actuation system 94. The heat exchange system 26 of FIGS. 2 and 3 also includes a control system 96.

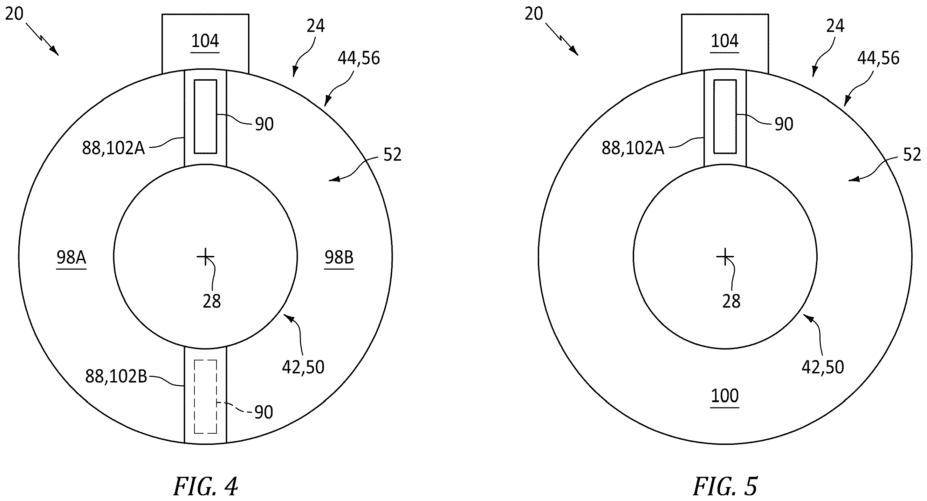

The vane structure 88 of FIGS. 2 and 3 is configured as a nacelle bifurcation structure of the engine housing 24. This vane structure 88 is disposed in the bypass flowpath 52. The vane structure 88 projects radially across the bypass flowpath 52 from the inner housing structure 42 to the outer housing structure 44. With such an arrangement, referring to FIGS. 4 and 5, the vane structure 88 may circumferentially bifurcate the bypass flowpath 52. For example, where the bypass duct has a D-duct arrangement as shown in FIG. 4, the vane structure 88 is disposed laterally (e.g., circumferentially or tangentially) between and separates two circumferential sections 98A and 98B of the bypass flowpath 52. In another example, where the bypass duct has an O-duct arrangement as shown in FIG. 5, the vane structure 88 is disposed laterally between and separates two circumferentially opposing sides of a circumferentially uninterrupted section 100 of the bypass flowpath 52. In some embodiments, referring to FIGS. 4 and 5, the vane structure 88 may be configured as an upper bifurcation structure 102A. This upper bifurcation structure 102A may be circumferentially aligned with a pylon structure 104 for mounting the aircraft powerplant 20 to an airframe component of the aircraft; e.g., a wing. In other embodiments, referring to FIG. 4, the vane structure 88 may be configured as a lower bifurcation structure 102B. This lower bifurcation structure 102B is arranged circumferentially opposite the upper bifurcation structure 102A and/or the pylon structure 104. Here, the terms "upper" and "lower" describe a relative orientation of an object relative to a direction of gravity when, for example, the aircraft is on-ground or in substantially level flight. The present disclosure, however, is not limited to such an exemplary arrangements. For example, where the aircraft powerplant 20 is mounted to a side of an aircraft fuselage, a span of the vane structure 88 may extend horizontally rather than vertically as shown in FIGS. 4 and 5. Moreover, while the vane structure 88 is described herein as a nacelle bifurcation structure, it is contemplated the vane structure 88 may alternatively be configured as another type of vane within the aircraft powerplant 20.

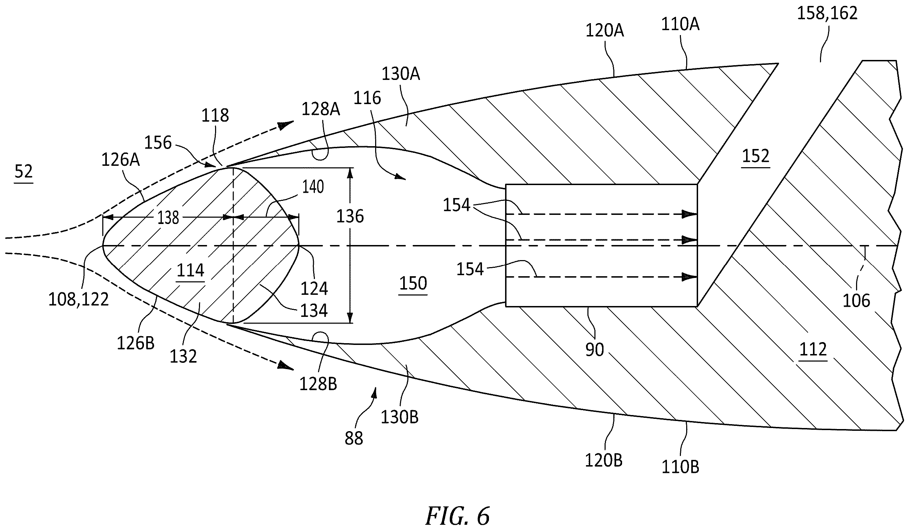

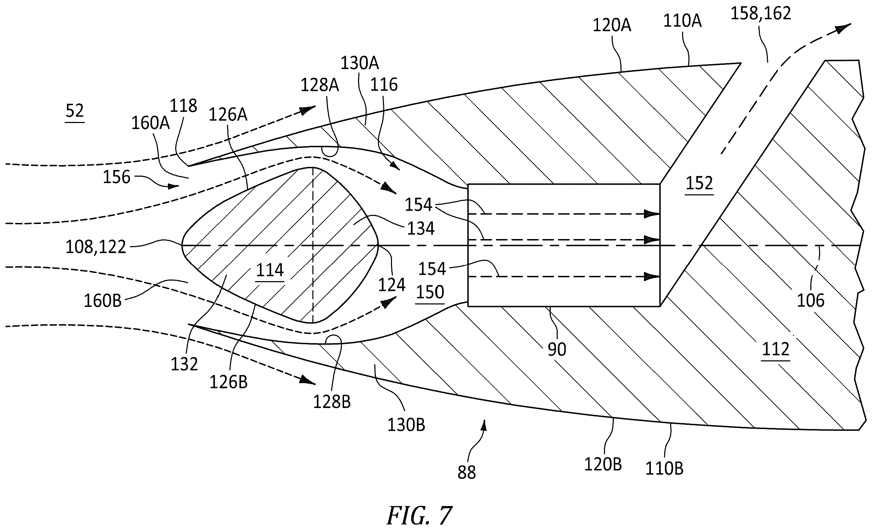

Referring to FIG. 2, the vane structure 88 extends longitudinally along a mean line 106 (e.g., a chord line) of the vane structure 88 from a (e.g., forward, upstream) leading edge 108 of the vane structure 88 to a (e.g., aft, downstream) trailing edge of the vane structure 88 (not visible in FIG. 2). The structure leading edge 108 of FIG. 2 is disposed in the bypass flowpath 52. The structure trailing edge may also be disposed in the bypass flowpath 52 or alternatively outside of and downstream from the bypass flowpath 52 where, for example, the bifurcation structure transitions into a nacelle for a portion of the pylon structure 104 outside of the engine housing 24. Referring to FIGS. 6 and 7, the vane structure 88 extends laterally between opposing lateral exterior sides 110A and 110B (generally referred to as "110") of the vane structure 88. The vane structure 88 of FIGS. 6 and 7 includes a stationary body 112, a translating and/or otherwise movable body 114, and an internal structure passage 116.

Referring to FIGS. 2 and 3, the stationary body 112 extends radially across the bypass flowpath 52 from the inner housing structure 42 and its inner nacelle structure 50 to the outer housing structure 44 and its outer nacelle structure 56. The stationary body 112 is also connected to (e.g., fixed to) the inner housing structure 42 and the outer housing structure 44. Referring to FIGS. 6 and 7, the stationary body 112 extends longitudinally along the mean line 106 from a (e.g., forward, upstream) leading end 118 of the stationary body 112 to the structure trailing edge (not visible in FIGS. 6 and 7). The stationary body 112 extends laterally between opposing lateral exterior sides 120A and 120B (generally referred to as "120") of the vane structure 88. With the movable body 114 in its first (e.g., extended, closed) position of FIG. 6, the stationary body first exterior side 120A forms a downstream section of the structure first exterior side 110A. Similarly, the stationary body second exterior side 120B forms a downstream section of the structure second exterior side 110B. By contrast, with the movable body 114 in its second (e.g., retracted, open) position of FIG. 7, the stationary body first exterior side 120A may form an entirety of the structure first exterior side 110A. Similarly, the stationary body second exterior side 120B may form an entirety of the structure second exterior side 110B.

The movable body 114 is configured to longitudinally translate and/or otherwise move between its first position of FIG. 6 and its second position of FIG. 7. The movable body 114 is disposed at (e.g., on, adjacent or proximate) the structure leading edge 108. The movable body 114 of FIG. 6, for example, at least partially (or completely) defines the structure leading edge 108. The movable body 114 of FIG. 6, for example, extends longitudinally along the mean line 106 from a (e.g., forward, upstream) leading edge 122 of the movable body 114 to a (e.g., aft, downstream) trailing edge 124 of the movable body 114. At least with the movable body 114 in its first position of FIG. 6, the movable body leading edge 122 at least partially or completely forms the structure leading edge 108.

The movable body 114 extends laterally between opposing lateral exterior sides 126A and 126B (generally referred to as "126") of the movable body 114. With the movable body 114 in its first position of FIG. 6, the movable body first exterior side 126A forms an upstream section of the structure first exterior side 110A longitudinally adjacent and upstream of the stationary body first exterior side 120A. Similarly, the movable body second exterior side 126B forms an upstream section of the structure second exterior side 110B longitudinally adjacent and upstream of the stationary body second exterior side 120B. By contrast, with the movable body 114 in its second position of FIG. 7, the movable body first exterior side 126A is laterally recessed (e.g., towards the mean line 106) from the structure first exterior side 110A as well as laterally spaced from a first interior side 128A of the stationary body 112. Here, a first sidewall 130A of the stationary body 112 forming the stationary body first interior side 128A longitudinally overlaps the movable body 114 and its movable body first exterior side 126A. Similarly, the movable body second exterior side 126B is laterally recessed (e.g., towards the mean line 106) from the structure second exterior side 110B as well as laterally spaced from a second interior side 128B of the stationary body 112. Here, a second sidewall 130B of the stationary body 112 forming the stationary body second interior side 128B longitudinally overlaps the movable body 114 and its movable body second exterior side 126B.

Referring to FIG. 6, the movable body 114 includes a forward, upstream section 132 and an aft, downstream section 134. Each of these movable body sections 132, 134 may be laterally tapered. A lateral width 136 of the movable body 114 measured between its opposing lateral exterior sides 126 may decrease as the upstream section 132 extends longitudinally, in a forward, upstream direction within the bypass flowpath 52, towards or to the leading edges 108, 122. Similarly, the lateral width 136 of the movable body 114 may decrease as the downstream section 134 extends longitudinally, in an aft, downstream direction within the bypass flowpath 52, towards or to the movable body trailing edge 124 / away from the leading edges 108, 122. The movable body 114 may thereby have a double-tapered (e.g., diamond shaped) sectional geometry when viewed in a reference plane, for example, perpendicular to the radial span of the vane structure 88. In the specific embodiment of FIG. 6, a longitudinal length 138 of the upstream section 132 is equal to or greater than a longitudinal length 140 of the downstream section 134. The present disclosure, of course, is not limited to the exemplary movable body shape described above.

Referring to FIG. 2, the movable body 114 and each of its sections 132 and 134 (see FIG. 6) extend radially from a radial inner end 142 of the movable body 114 to a radial outer end 144 of the movable body 114. The movable body inner end 142 of FIG. 2 is spaced radially outward from the inner housing structure 42 and its inner nacelle structure 50. An inner extension 146 from the stationary body 112 may fill a radial gap between the movable body 114 and the inner housing structure 42. Similarly, the movable body outer end 144 of FIG. 2 is spaced radially outward from the outer housing structure 44 and its outer nacelle structure 56. An outer extension 148 from the stationary body 112 may fill a radial gap between the movable body 114 and the outer housing structure 44. However, in other embodiments, it is contemplated the movable body inner end 142 may alternatively be radially next to the inner housing structure 42 and its inner nacelle structure 50; e.g., slightly spaced by a slight clearance gap. It is also or alternatively contemplated the movable body outer end 144 may alternatively be radially next to the outer housing structure 44 and its outer nacelle structure 56; e.g., slightly spaced by a slight clearance gap.

Referring to FIG. 7, the structure passage 116 includes an inlet passage 150, an outlet passage 152 and one or more internal air passages 154 through the heat exchanger 90. The structure passage 116 extends through the vane structure 88 between an airflow inlet 156 into the structure passage 116 to an airflow outlet 158 from the structure passage 116. Here, the passage inlet 156 is also an airflow inlet into the inlet passage 150. The passage outlet 158 is also an airflow outlet from the outlet passage 152.

The passage inlet 156 is (e.g., fully) opened when the movable body 114 is in its second position of FIG. 7. This passage inlet 156 is disposed at the structure leading edge 108 and is formed by and laterally between the stationary body 112 and the movable body 114. The passage inlet 156 of FIG. 7, for example, includes and is collectively formed by at least (or only) a first inlet orifice 160A and a second inlet orifice 160B. The first inlet orifice 160A is formed by and is disposed laterally between the stationary body first sidewall 130A and the movable body 114. More particularly, the first inlet orifice 160A extends laterally from the stationary body first interior side 128A and the movable body first exterior side 126A. Similarly, the second inlet orifice 160B is formed by and is disposed laterally between the stationary body second sidewall 130B and the movable body 114. More particularly, the second inlet orifice 160B extends laterally from the stationary body second interior side 128B and the movable body second exterior side 126B. With this arrangement, the movable body 114 is located laterally between the first inlet orifice 160A and the second inlet orifice 160B, for example laterally centered within the passage inlet 156. By contrast, the passage inlet 156 is (e.g., fully) closed when the movable body 114 is in its first position of FIG. 6. The movable body 114 of FIG. 6, for example, plugs up, covers and/or otherwise (e.g., completely) obstructs flow into the structure passage 116 and its inlet passage 150 from the bypass flowpath 52. With such an arrangement, a flow area of the passage inlet 156 / flow areas of the inlet orifices 160A and 160B (generally referred to as "160") is/are variable depending on a longitudinal position of the movable body 114 relative to the stationary body 112. Thus, the passage inlet 156 is a variable area passage inlet and the inlet orifices 160 are variable area inlet orifices. Moreover, it is also contemplated the movable body 114 may be moved to one or more set intermediate positions (or an infinite number of intermediate positions) between the first position of FIG. 6 and the second position of FIG. 7.

The passage outlet 158 is open independent of the longitudinal position of the movable body 114. More particularly, the passage outlet 158 is (e.g., fully) open when the movable body 114 is in its first position of FIG. 6, its second position of FIG. 7, or any intermediate position therebetween. The passage outlet 158 of FIGS. 6 and 7, for example, is formed by at least (or only) a single outlet orifice 162 in the vane structure 88 and its stationary body 112. The outlet orifice 162 of FIGS. 6 and 7, for example, is formed as an opening in the structure first exterior side 110A / the stationary body first exterior side 120A. With such an arrangement, a flow area of the passage outlet 158 / a flow area of the outlet orifice 162 is fixed; e.g., non-variable. Thus, the passage outlet 158 is a fixed area passage outlet and the outlet orifice 162 is a fixed area outlet orifice.

The inlet passage 150 of FIG. 7 projects into the vane structure 88 and its stationary body 112 from the passage inlet 156 at the stationary body leading end 118 towards or to the heat exchanger 90. The outlet passage 152 of FIG. 7 projects into the vane structure 88 and its stationary body 112 from the passage outlet 158 at the structure first exterior side 110A / the stationary body first exterior side 120A towards or to the heat exchanger 90. The one or more heat exchanger air passages 154 extend through the heat exchanger 90, for example in parallel, and fluidly couple the inlet passage 150 to the outlet passage 152. With this arrangement, the structure passage 116 may be (e.g., completely) contained within the vane structure 88.

Referring to FIGS. 2, 3, 6 and 7, the heat exchanger 90 is arranged within the vane structure 88 and its stationary body 112. The heat exchanger 90 is fluidly coupled with the structure passage 116 inline between the inlet passage 150 and the outlet passage 152 as described above. The heat exchanger 90 of FIGS. 2 and 3 is also fluidly coupled inline along the working fluid circuit 92. In particular, in addition to including the heat exchanger air passages 154, the heat exchanger 90 also includes one or more working fluid passages 164. Each of these heat exchanger working fluid passages 164 extend within and/or through the heat exchanger 90 and are fluidly discrete from the heat exchanger air passages 154. The heat exchanger air passages 154 and the heat exchanger working fluid passages 164 may be arranged within the heat exchanger 90 to configure the heat exchanger 90 as a crossflow heat exchanger, a counterflow heat exchanger, a parallel flow heat exchanger, or a hybrid heat exchanger with a combination crossflow, counterflow and/or parallel flow arrangement. Where the working fluid flowing through the working fluid circuit 92 is a liquid, the heat exchanger 90 is configured as a liquid-to-air heat exchanger. Where the working fluid flowing through the working fluid circuit 92 is a gas (e.g., bled core air), the heat exchanger 90 is configured as a gas-to-air heat exchanger; e.g., an air-to-air heat exchanger.

The working fluid circuit 92 of FIGS. 2 and 3 may be fluidly coupled to or configured as part of another system 166 of the aircraft powerplant 20. Examples of this working fluid system 166 include, but are not limited to, a lubrication system for one or more lubricated components of the aircraft powerplant (e.g., bearings, gears, seals, etc.), a cooling system for one or more components of the aircraft powerplant (e.g., rotor blades, flowpath walls, shrouds, seals, etc.), an environmental control system (ECS) for the aircraft, or the like. The working fluid circuit 92 extends into the vane structure 88, through the heat exchanger 90 via its heat exchanger working fluid passages 164, and then back out of the vane structure 88.

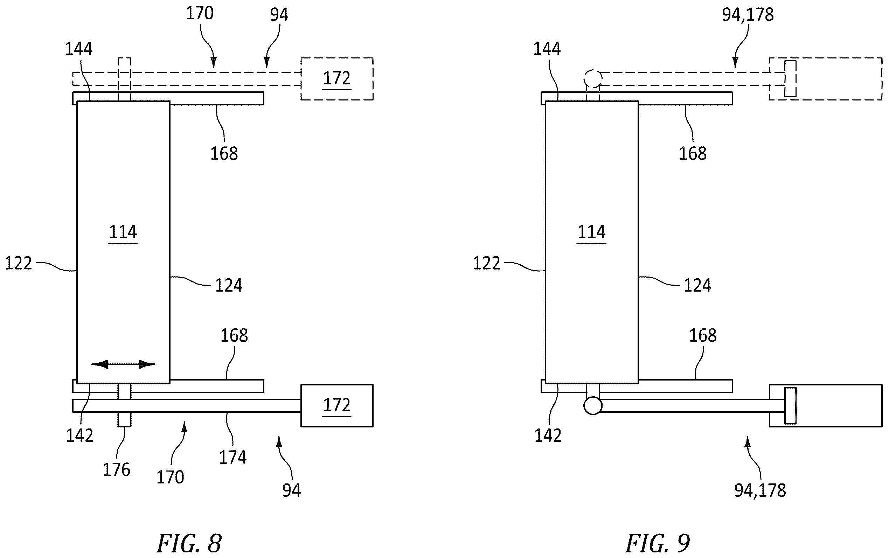

The actuation system 94 is configured to translate and/or otherwise move the movable body 114 between its first position of FIG. 2 and its second position of FIG. 3. The movable body 114 of FIGS. 8 and 9 may be configured to move longitudinally along one or more guides 168; e.g., tracks, rails, channels, etc.

In some embodiments, referring to FIG. 8, the actuation system 94 may include a lead screw drive 170 and an actuator 172. The lead screw drive 170 is configured to operatively couple the actuator 172 to the movable body 114. The lead screw drive 170 of FIG. 8, for example, includes a threaded lead screw shaft 174 and a lead screw nut 176 mounted on (e.g., threaded on) the lead screw shaft 174. With this arrangement, the lead screw drive 170 is configured to translate a rotational output from the actuator 172 into a longitudinal input to the movable body 114. The lead screw drive 170 of FIG. 8 is attached to the movable body 114 at its inner end 142. However, in other embodiments, it is contemplated the lead screw drive 170 may alternatively be attached to the movable body 114 at its outer end 144. In still other embodiments, it is contemplated the actuation system 94 may include multiple of the lead screw drives 170, where each lead screw drive 170 is attached to a respective movable body end 142, 144 for example. Examples of the actuator 172 include, but are not limited to, an electric motor, a hydraulic motor, a pneumatic motor, or the like.

In other embodiments, referring to FIG. 9, the actuation system 94 may include a linear actuator 178 attached to the movable body 114. An example of this linear actuator 178 is a hydraulic piston.

Referring to FIGS. 2 and 3, the control system 96 includes a sensor system 180 and a controller 182. The sensor system 180 is configured to measure one or more operational parameters such as, but not limited to: a temperature of the ambient air outside of the aircraft and its aircraft powerplant 20; a temperature of the working fluid flowing within the working fluid circuit 92 (e.g., output from the heat exchanger 90, input into the heat exchanger 90, etc.); and/or a temperature of the working fluid flowing within the working fluid system 166. The sensor system 180, for example, may include one or more temperature sensors 184 in signal communication with (e.g., hardwired and/or wirelessly coupled to) the controller 182. This controller 182 is also in signal communication with the actuation system 94 and its actuator 172, 178 (see also FIGS. 8 and 9).

The controller 182 may be configured as or in signal communication with an onboard engine controller; e.g., an electronic engine controller (EEC), an electronic control unit (ECU), a full-authority digital engine controller (FADEC), etc. The controller 182 may be implemented with a combination of hardware and software. The hardware may include memory 186 and at least one processing device 188, which processing device 188 may include one or more single-core and/or multi-core processors. The hardware may also or alternatively include analog and/or digital circuitry other than that described above.

The memory 186 is configured to store software (e.g., program instructions) for execution by the processing device 188, which software execution may control and/or facilitate performance of one or more operations such as those described herein. The memory 186 may be a non-transitory computer readable medium. For example, the memory 186 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

During aircraft powerplant operation, the working fluid is directed through the working fluid circuit 92 and its heat exchanger working fluid passages 164. When the movable body 114 is in its first position of FIG. 2 (see also FIG. 6), the movable body 114 plugs, blocks and/or otherwise obstructs air flow into the structure passage 116 through its passage inlet 156. Thus, while the movable body 114 is in its first position of FIG. 2, there is relatively little or no air flow through the structure passage 116 and, thus, the heat exchanger 90. The working fluid may thereby flow through the heat exchanger 90 with little or no change to its heat energy and, thus, its temperature. By contrast, when the movable body 114 is in its second position of FIG. 3 (see also FIG. 7) or an intermediate position, the movable body 114 opens up the passage inlet 156. The vane structure 88 may thereby direct (e.g., bleed) a quantity of the bypass air from the bypass flowpath 52 into the inlet passage 150 through the passage inlet 156. Thus, while the movable body 114 is in its second position of FIG. 3 or an intermediate position, both the bleed air and the working fluid may flow through the heat exchanger 90 simultaneously. Heat energy may thereby be transferred from the relatively hot working fluid into the relatively cool bleed air through material / a structure of the heat exchanger 90. This heat energy exchanger cools the working fluid and heats the bleed air. After flowing through the heat exchanger 90, the now heated bleed air flows through the outlet passage 152 and is exhausted from the vane structure 88 back into the bypass flowpath 52 through the passage outlet 158. Here, exhausting the bleed air back into the bypass flowpath 52 through the passage outlet 158 may facilitate some thrust recovery.

To modulate cooling of the working fluid at the heat exchanger 90, the controller 182 may control operation of the actuation system 94 and its actuator 172, 178 based on at least (or only) one the measured operational parameters. For example, the controller 182 may receive sensor data from the sensor system 180 indicative of a select measured operational parameter; e.g., the ambient air temperature or the working fluid temperature. The controller 182 may then compare this measured operational parameter (or another parameter derived or otherwise determined therefrom) to a respective threshold. Where the measured operational parameter (or the other parameter) is greater than or equal to the threshold, the controller 182 may signal the actuation system 94 to move the movable body 114 towards or to its second position of FIG. 3 (see also FIG. 7). By moving the movable body 114 towards or to its second position of FIG. 3, the air flow bled from the bypass flowpath 52 into the vane structure 88 and its structure passage 116 increases. By increasing this air flow, more of the bleed air is directed through the heat exchanger 90 which may facilitate the transfer of more heat energy out of the working fluid. However, where the measured operational parameter (or the other parameter) is less than the threshold, the controller 182 may signal the actuation system 94 to move the movable body 114 towards or to its first position of FIG. 2 (see also FIG. 6). By moving the movable body 114 towards or to its first position of FIG. 2, the air flow bled from the bypass flowpath 52 into the vane structure 88 and its structure passage 116 decreases or stops. By decreasing or stopping this air flow, less or none of the bleed air is directed through the heat exchanger 90 which may facilitate the transfer of less or no heat energy out of the working fluid.

The threshold utilized by the controller 182 may be a variable threshold and provided by a lookup table, a model or otherwise. The threshold may thereby be adapted (e.g., changed, selected, etc.) based on one or more other operational parameters and/or based on aircraft mission status. For example, when the aircraft is flying at cruise and/or at a relatively high elevation, the ambient air is relatively cool. The working fluid system 166 may thereby need less cooling and/or the bleed air within the structure passage 116 may be more effective for cooling the working fluid. By contrast, when the aircraft is on-ground, taxiing, taking off, beginning its climb, approaching the ground and/or landing, the ambient air is relatively warm. The working fluid system 166 may thereby need more cooling and/or the bleed air within the structure passage 116 may be less effective for cooling the working fluid. Thus, the threshold may be selected or changed such that the controller 182 is more likely to close or decrease the area of the passage inlet 156 when aircraft is flying at cruise and/or at a relatively high elevation. In another example, the threshold may be selected or changed based on whether the ambient air temperature outside of the aircraft (whether or not on-ground or in flight) is relatively hot or cold. The present disclosure, however, is not limited to such exemplary threshold variation and/or operation based on mission status. In addition, while a single threshold is generally described above for ease of description, multiple thresholds may be used to facilitate incrementally opening or closing the passage inlet 156. Moreover, it is contemplated the controller 182 may control operation of the actuation system 94 without use of such threshold(s). For example, the controller 182 may run a control algorithm which directly ties opening / closing of the passage inlet 156 to the measured operational parameter.

In some embodiments, the control system 96 may utilize a closed loop control scheme. Such a closed loop control scheme may be used where, for example, the measured operational parameter is the working fluid temperature. **In** other embodiments, the control system 96 may utilize an open loop control scheme. Such an open loop control scheme may be used where, for example, the measured operational parameter is the ambient air temperature.

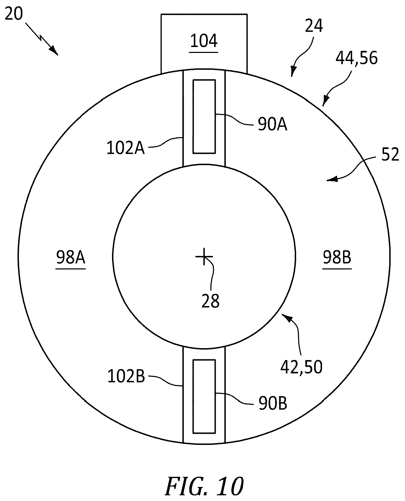

In some embodiments, referring to FIGS. 4 and 5, the aircraft powerplant 20 may be configured with a single heat exchanger 90. In other embodiments, referring to FIG. 10, the aircraft powerplant 20 may be configured with multiple heat exchangers 90A and 90B (generally referred to as "90"). Each heat exchanger 90 of FIG. 10 is configured with a respective one of the bifurcation structures 102.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft powerplant (20), comprising:
a vane structure (88) extending longitudinally to a leading edge (108) of the vane structure (88), the vane structure (88) including a translating body (114), a stationary body (112) and an inlet passage (150), the translating body (114) configured to translate longitudinally between a first position and a second position, the translating body (114) configured to form the leading edge (108) of the vane structure (88) and close an inlet (156) into the inlet passage (150) when in the first position, and the translating body (114) configured to open the inlet (156) into the inlet passage (150) when in the second position; and
a heat exchanger (90) disposed within the stationary body (112), the inlet passage (150) projecting into the stationary body (112) from the inlet (156) into the inlet passage (150) to the heat exchanger (90).

2. The assembly of claim 1, wherein the vane structure (88) is configured as a nacelle bifurcation structure.

3. The assembly of claim 1 or 2, further comprising:
an engine core (46) including a compressor section (31), a combustor section (32) and a turbine section (33); and
a bypass flowpath (52) disposed outside of the engine core (46);
the vane structure (88) disposed in and extending across the bypass flowpath (52).

4. The assembly of claim 1, 2 or 3, wherein the aircraft powerplant (20) comprises a turbofan propulsion system.

5. The assembly of any preceding claim, wherein the translating body (114) translates longitudinally into the inlet passage (150) as the translating body (114) translates towards the second position.

6. The assembly of any preceding claim, wherein the inlet (156) into the inlet passage (150) is at least partially formed by and laterally between a first side (126A) of the translating body (114) and a first wall (130A) of the stationary body (112).

7. The assembly of any preceding claim, wherein
the inlet (156) into the inlet passage (150) includes a first inlet orifice (160A) and a second inlet orifice (160B) with the translating body (114) disposed laterally between the first inlet orifice (160A) and the second inlet orifice (160B);
the first inlet orifice (160A) is formed by and laterally between a first exterior side (126A) of the translating body (114) and a first interior side (128A) of the stationary body (112); and
the second inlet orifice (160B) is formed by and laterally between a second exterior side (126B) of the translating body (114) and a second interior side (128B) of the stationary body (112).

8. The assembly of any preceding claim, wherein the translating body (114) includes
an upstream section (132) that laterally tapers as the upstream section (132) extends longitudinally towards the leading edge (108) of the vane structure (88); and
a downstream section (134) that laterally tapers as the downstream section (134) extends longitudinally away from the leading edge (108) of the vane structure (88),
optionally wherein a longitudinal length (138) of the upstream section (132) is greater than a longitudinal length (140) of the downstream section (134).

9. The assembly of any preceding claim, wherein the inlet (156) into the inlet passage (150) is at the leading edge (108) of the vane structure (88) when the translating body (114) is in the second position.

10. The assembly of any preceding claim, wherein
the vane structure (88) further includes an outlet passage (152);
the outlet passage (152) extends from the heat exchanger (90) through the stationary body (112) to an outlet (158) from the outlet passage (152) in an exterior of the stationary body (112), optionally wherein the outlet (158) from the outlet passage (152) is a fixed area outlet.

11. The assembly of claim 10, wherein
the stationary body (112) extends laterally between a first exterior side (120A) of the stationary body (112) and a second exterior side (120B) of the stationary body (112); and
the outlet (158) from the outlet passage (152) is disposed in the first exterior side (120A) of the stationary body (112).

12. The assembly of any preceding claim, further comprising an actuation system (94) configured to translate the translating body (114) between the first position and the second position, the actuation system (94) including an actuator (172) and a lead screw drive (170) operatively coupling the actuator (172) to the translating body (114).

13. The assembly of any of claims 1 to 11, further comprising a linear actuator (178) configured to translate the translating body (114) between the first position and the second position.

14. The assembly of any preceding claim, further comprising:
an/the actuator (172; 178) operatively coupled to the translating body (114);
a controller (182) in signal communication with the actuator (172; 178), the controller (182) configured to signal the actuator (172; 178) to move the translating body (114) to or towards the first position when a measured parameter temperature is below a threshold, and the controller (182) configured to signal the actuator (172; 178) to move the translating body (114) to or towards the second position when the measured parameter temperature is above the threshold.

15. The assembly of claim 14, wherein the measured parameter temperature is indicative of a temperature of ambient air outside of the aircraft powerplant (20), or the measured parameter temperature is indicative of a temperature of fluid within the aircraft powerplant (20).
